# EUROPÄISCHE PATENTSCHRIFT

(11) **EP 1 578 639 B1**
(45) Veröffentlichungstag und Bekanntmachung des Hinweises auf die Patenterteilung: **15.08.2007**
(21) Anmeldenummer: 03782299.6
(22) Anmeldetag: 03.12.2003
(51) Int. Cl.: B60N 2/48, B60R 7/04, B60R 7/10

(54) **KLEIDERBÜGEL MIT KOPFSTÜTZE**
CLOTHES HANGER WITH A HEADREST
CINTRE A APPUI-TETE

(30) Priorität: 23.12.2002 DE 10261896
(43) Veröffentlichungstag der Anmeldung: 28.09.2005
(73) Patentinhaber: Volkswagen AG, 38436 Wolfsburg (DE)
(72) Erfinder: ANDRONIS, Odysseus, 38302 Wolfenbüttel (DE)
(74) Vertreter: Schneider, Henry
(86) Internationale Anmeldenummer: PCT/EP2003/013667
(87) Internationale Veröffentlichungsnummer: WO 2004/058536

(56) Entgegenhaltungen:
- EP-A- 0 753 427
- EP-A- 0 844 138
- WO-A-93/25411
- WO-A-97/03864
- DE-A- 3 801 625
- DE-U- 29 605 143
- DE-U- 29 920 466
- US-A- 4 711 488
- PATENT ABSTRACTS OF JAPAN Bd. 2002, Nr. 09, 4. September 2002 (2002-09-04) -& JP 2002 144966 A (NIFCO INC), 22. Mai 2002 (2002-05-22)

## Beschreibung

Die Erfindung betrifft eine Vorrichtung zum Aufhängen von Gegenständen, insbesondere Kleiderstücken in einem Kraftfahrzeug, mit den im Oberbegriff des Anspruchs 1 genannten Merkmalen.

Es ist bekannt, dass zumeist bei Reiseantritt, insbesondere bei längeren Reisen mit dem Auto, dem Zug, dem Flugzeug oder per Schiff, die Notwendigkeit besteht, seine Kleidungsstücke so unterzubringen, dass sie während der Reise sicher verstaut sind und dabei möglichst faltenfrei und unverschmutzt bleiben.

In den meisten Kraftfahrzeugen befinden sich dazu im Bereich der Rücksitze oder über den Seitenfenstem vorgesehene Kleiderhaken, an denen zum Beispiel ein Jackett oder dergleichen aufgehangen werden kann. Oft wird jedoch dazu ein Kleiderbügel verwendet und der Kleiderbügel an diesem Haken aufgehängt. So aufgehängte Kleidungsstücke beeinträchtigen erheblich die Fahrsicherheit, da massive Sichtbehinderungen die Folge sind. Ferner stören die Kleiderstücke Mitreisende beim Zugang zum Rücksitz.

Aus der Druckschrift DE-U- 296 05 143 ist ferner bekannt; eine mobile Vorrichtung einzusetzen, die entsprechend einer Garderobe hinter Fahrer- und/oder Beifahrersitz angebracht werden kann. Diese Vorrichtung weist dabei ein Gewebe-/Gurtband und eine Grundplatte auf, auf dem ein schwenk- und arretierbarer Bügel aus thermoplastischem Kunststoff befestigt ist. Diese Vorrichtung ist zwar flexibel einsetzbar. Einmal angebracht besteht in nachteiliger Weise im Crash-Fall ein großes Verletzungsrisiko und zudem ist die Anbringung mit einem Gewebeband meist unpraktikabel und unansehnlich.

Es existieren nach dem Stand der Technik weitere Lösungen, bei denen Vorrichtungen zum Aufhängen von Kleidungsstücken in bügelförmige, Haltegriffe integriert sind. Die EP 0 753 427 A2 beschreibt einen Haltegriff, der zumindest ein gelagertes Bügelteil aufweist, dessen Stellung , mittels einfacher Handgriffe zwischen einer Funktionsstellung und einer Nichtfunktionsstellung veränderbar ist. Der Haltegriff ist dabei fest mit einem Basisteil verbunden. Dafür kommen beispielsweise eine Kopfstütze oder eine Rückenlehne in einem Kraftfahrzeug in Frage. Nachteilig hierbei ist, dass die Integration in den Haltegriff in beiden Stellungen Funktionsstellung und in Nichtfunktionsstellung bei Unfällen zu Verletzungen führen kann. Da zumeist seitliche Bügelelemente aus dem Haltegriff geführt werden, ist auch nicht zu erwarten, dass der Aufprall eines Insassen zu einer Bewegung der Vorrichtung in Verwahrstellung beziehungsweise Nichtfunktionsstellung führt. Ferner fehlt einer solchen Vorrichtung jede Möglichkeit der Höhenverstellbarkeit.

Die Offenlegungsschrift DE-A- 38 01 625 beschreibt ebenfalls einen Halter mit den gleichen bereits zur Druckschrift EP-A-0 753 427 genannten Nachteilen. In ihr ist ein Halter für Kleidungstücke in Kraftwagen angegeben, der bei Nichtgebrauch in einer Aussparung eines Aufnahmekörpers versenkt liegt, in welchem er gelenkig gelagert ist, und aus dem er in eine Gebrauchsstellung vor den Aufnahmekörper herausschwenkbar ist. Der Halter ist ähnlich einem Kleiderbügel ausgebildet und umfasst zwei mit dem Ende der Aussparung festgelegte und aus dieser herausschwenkbare Haltearme, an deren Ende jeweils ein gelenkig bewegbarer Bügelarm anschließt, der bei Nichtgebrauch in gestreckter Lage mit den Haltearmen in den Aussparungen liegt, und in der Gebrauchsstellung mit Abstand und etwa parallel zu diesem vor den Aufnahmekörper schwenkbar ist.

Weiterhin sind Lösungen bekannt, bei denen Bemühungen erkennbar sind, die Unterbringung von Vorrichtungen dieser Art möglichst unsichtbar anzuordnen. So offenbart das Gebrauchsmuster DE-U- 299 20 466 einen Kraftfahrzeugsitz mit einem Sitzteil und einer Rückenlehne, an der ein Aufhängeelement mit einem Aufhängebereich für Kleidungsstücke vorgesehen ist, der aus einer mit der Rückenlehne bündigen Nichtgebrauchsstellung in eine Gebrauchsstellung bewegbar ist, wobei das Aufhängeelement einen Bügel aufweist, der aus einer versenkten und mit der Kontur der Rückenlehne bündigen Nichtgebrauchsstellung in eine davon beabstandete, parallele Gebaruchsstellung verschiebbar geführt ist. Auch diese Lösung kommt in der Nichtgebrauchsstellung nicht ohne sichtbare Elemente aus, so dass zum einen das Design beeinträchtigt wird und zum anderen schon in der Nichtgebrauchsstellung Verletzungsgefahr an der mit der Rückenlehne bündig angeordneten Kante besteht. Nach einem Ausfahren des Bügels besteht ferner die Gefahr der Verletzung, da eine durch eine horizontale Krafteinwirkung nachgebende Vorrichtung bei dieser Konstruktion ebenfalls nicht erwartet werden kann.

Als nächstliegender Stand der Technik ist schließlich die WO-A-97/03 864 (Figuren 4 and 5) bekannt geworden, die eine Vorrichtung zum Aufhängen von Kleidungsstücken, insbesondere in Fahrzeugen, mit einem Aufnahmegehäuse für den Einbau in einen Einbaukörper, wie Rückenlehnen von Sitzen, Kopfstützen oder dergleichen, und einen, in das Aufnahmegehäuse in einer inneren Endstellung aufnehmbaren Halter beschreibt, der aus dieser inneren Endstellung in eine im Wesentlichen außerhalb des Aufnahmegehäuses angeordnete äußere Endstellung verlagerbar ist, in welcher der Halter das Aufhängen von Kleidungsstücken ermöglicht. In einem Ausführungsbeispiel der WO-A-97/03 864 ist der aus mehreren Teilen bestehende Halter in Abhängigkeit der Verlagerung einer, einen Innenraum des Aufnahmegehäuses der Kopfstütze abdeckenden, Frontwand ausgebildet. Unter Aufhebung der Kontur der Kopfstütze ist der Halter durch Verlagerung der Frontwand sowohl selbsttätig in eine Gebrauchsstellung als auch selbsttätig in die Nichtgebrauchsstellung bringbar, wobei die Kontur der Kopfstütze gleichzeitig wiederherstellbar ist.

Ausgehend von dem eingangs erwähnten Stand der Technik und dessen Nachteilen liegt der Erfindung daher die Aufgabe zugrunde, ein Kraftfahrzeug der als bekannt vorausgesetzten Art so auszubilden, dass eine Vorrichtung zum Aufhängen von Gegenständen, insbesondere Kleiderstücken, in diesem Kraftfahrzeug möglich ist, ohne dass das Design eines Kraftfahrzeugsitzes in der Nichtgebrauchsstellung diese Vorrichtung vermuten lässt. Ferner ist es die Aufgabe, die Vorrichtung möglichst flexibel verstellbar zu gestalten, und sie so anzuordnen, dass im Crash-Fall eine weitestgehende Rückführung der Vorrichtung von der Gebrauchsstellung in die Nichtgebrauchsstellung ermöglicht wird.

Diese Aufgabe wird durch eine Vorrichtung der eingangs genannten Art gemäß WO-A-97/03864 (Figuren 4 und 5) dadurch gelöst, daß die beweglichen Elemente des Bügelelementes gemeinsam mit dem ausgebildeten bügelörmigen Element in Gebrauchsstellung ausschließlich außerhalb des mindestens einen Einbaukörpers am Abdeckelement ausgebildet sind.

In besonders vorteilhafter Weise ist das bügelförmige Element in seiner Nichtgebrauchsstellung vollständig im Einbaukörper integriert und nicht sichtbar, insbesondere aus Sicht eines Designers ist diese Möglichkeit von besonderem Vorteil, da Flächen frei von Vorrichtungen auf den jeweiligen Abdeckelementen entworfen werden können.

Das bügelförmige Element ist durch seine Integration praktisch handhabbar und steht stets zur Verfügung. Je nach Ausführung besteht zudem die Möglichkeit der Höhenverstellbarkeit.

Somit ist! das bügelförmige Element an den jeweiligen Nutzer anpassbar. Das bügelförmige Element stellt nicht nur eine Hilfsvorrichtung dar, sondern kann als vollwertiger Kleiderbügel betrachtet und benutzt werden.

In bevorzugter Ausgestaltung der Erfindung bildet ein erstes Abdeckelement, in einem dafür vorgesehenen ersten Raum, eine erste Kontur eines Teiles des Einbaukörpers aus. Dieser Einbaukörper ist beispielsweise eine Kopfstütze, die mittels Kopfstützenhalterungen an der Rückenlehne des Kraftfahrzeugsitzes befestigt ist. Das erste Abdeckelement ist drehbeweglich auf einer ersten Achse gelagert und ermöglicht somit, dass die Kopfstütze in dem das Abdeckelement aufweisenden Teil des Einbaukörpers öffenbar und schließbar ist.

Auf der der Kopfstütze zugewandten Seite des ersten Abdeckelementes sind erfindungsgemäß eine Stange, Übertragungselemente, mindestens ein erstes Ver- und Entriegelungselement sowie mindestens ein erstes bügelförmiges Element angeordnet. Das erste bügelförmige Element ist auf einer Drehachse drehbeweglich in einem Halteelement angeordnet, wobei das Halteelement mit dem mindestens einen ersten Abdeckelement verbunden ist. Ferner ist das mindestens eine erste Ver- und Entriegelungselement als ein zur Kopfstütze gerichtetes, stegartiges Element ausgebildet, welches an seinem Ende eine bewegliche Komponente aufweist. Das stegartige Element ist mit der Stange verbunden. Des Weiteren weist die Kopfstütze, die im Einbaukörper selbst angeordnet ist, ein Führungselement mit mindestens einer ersten und einer zweiten Aussparung auf, die unterschiedliche Tiefen besitzen.

In weiterer bevorzugter Ausgestaltung der Erfindung umfassen die Übertragungselemente mindestens ein Stangenglied, mindestens einen beweglichen. Übertragungsbügel, mindestens einen beweglichen Verbindungsbügel und mindestens ein Federelement. Der mindestens eine bewegliche Übertragungsbügel ist einerseits mit dem Stangenglied und andererseits mit dem mindestens einen bügelförmigen Element verbunden. Der mindestens eine bewegliche Verbindungsbügel ist einerseits mit dem Übertragungsbügel und andererseits mit dem mindestens einen bügelförmigen Element verbunden.

In einer weiteren Ausführungsform ist in bevorzugter Ausführung ein zweites Abdeckelement in einem zweiten dafür vorgesehenen Raum angeordnet, wobei das zweite Abdeckelement in diesem Raum eine zweite Kontur eines Teiles des Einbaukörpers einnimmt. Dieser Einbaukörper ist in dieser Ausführungsform insbesondere eine Konsole, die vorzugsweise zwischen der Kopfstütze und einer die Kopfstütze tragenden Rückenlehne angeordnet ist. Das zweite Abdeckelement umfasst ein Schiebeelement, welches entlang einer Achse ein erstes Gelenk aufweist und in Schieberichtung reversibel verlagerbar ist. Das erste Gelenk verbindet das Schiebeelement mit einem Verbindungselement, welches in bevorzugter . Ausführung der Erfindung ein zweites bügelförmiges Element aufweist. Das zweite Schiebeelement ermöglicht die Vorrichtung aus einer Nichtgebrauchsstellung in die Gebrauchsstellung zu verlagern, wobei das Schiebeelement selbst in einer Ausnehmung der Konsole anordbar ist. Das Erreichen der Gebrauchsstellung wird in einer bevorzugten Ausführungsvariante dadurch erreicht, dass das Schiebeelement in. Schieberichtung verschoben wird und anschließend am ersten Gelenk um eine zweite Schwenkachse, vorzugsweise um 90°; geklappt wird.

Zur Begrenzung und Justage der Klappbewegung weist das zweite bügelförmige Halteelement entweder eine Gestängevorrichtung oder eine Rastschiene mit im bügelförmigen Element angeordneten Zähnen auf. Die Gestängevorrichtung begrenzt die Klappbewegung durch eine entsprechende Gestängelänge und in einer zweiten Ausführungsform greifen die Zähne des zweiten bügelförmigen Halteelementes in die Rastschiene ein.

In bevorzugter Ausführung ist die Konsole mittels einer Arretierungsvorrichtung an den Kopfstützenhalterungen reversibel verschiebbar und arretierbar, wodurch in vorteilhafter Weise eine Höhenverstellung des zweiten bügelförmigen Halteelementes erreichbar ist.

Bevorzugt ist in einer weiteren Ausführungsvariante, dass ein drittes Abdeckelement, in einem dafür vorgesehenen dritten Raum, eine dritte Kontur eines Teils des Einbaukörpers, insbesondere der Rückenlehne, vorzugsweise an einer Oberseite der Rückenlehne einnimmt. Das dritte Abdeckelement weist dabei ein Stützelement auf, welches in einem in der Rückenlehne dafür vorgesehenen Schacht angeordnet ist. Das Stützelement weist einendseitig ein Verbindungsglied auf, an dem mindestens ein drittes bügelförmiges Element angeordnet ist.

Bevorzugt ist ferner, dass das Stützelement mindestens einen Anschlag ausbildet und vorzugsweise ein zweites Gelenk aufweist, welches die Verbindung zwischen dem Stützelement und dem Verbindungsglied herstellt. Das zweite Gelenk verläuft auf einer im Wesentlichen horizontalen Achse.

Die Gebrauchsstellung ist durch Herausziehen des Stützelementes aus einem in der Rückenlehne angeordneten Schacht erreichbar, wodurch sich direkt das mindestens eine dritte bügelförmige Element, welches an dem Verbindungsglied angeordnet ist, ausbildet.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: eine Seitenansicht eines Einbaukörpers, insbesondere einer Kopfstütze, in Gebrauchsstellung einer Vorrichtung;
- Figur 2: eine perspektivische Innenansicht des Einbaukörpers, insbesondere der Kopfstütze, in Nichtgebrauchsstellung der Vorrichtung;
- Figur 3: eine Innenansicht des Einbaukörpers, insbesondere der Kopfstütze, in Gebrauchsstellung der Vorrichtung;
- Figur 4: eine perspektivische Ansicht eines Einbaukörpers in einer weiteren Ausführungsform, insbesondere einer Konsole, in Gebrauchsstellung der Vorrichtung;
- Figur 5: einen Schnitt auf einer Achse durch die Konsole im Bereich der Vorrichtung in einer Ausführungsform in Gebrauchsstellung;
- Figur 6: einen Schnitt auf der Achse durch die Konsole im Bereich der Vorrichtung in einer weiteren Ausführungsform in Nichtgebrauchsstellung;
- Figur 7: einen Schnitt auf der Achse durch die Konsole im Bereich der Vorrichtung in der weiteren Ausführungsform in Gebrauchsstellung;
- Figur 8: einen Schnitt durch die Konsole im Bereich einer Kopfstützenhalterung in Nichtgebrauchsstellung der Vorrichtung;
- Figur 9: eine perspektivische Ansicht eines Einbaukörpers in einer weiteren Ausführungsform, insbesondere einer Rückenlehne, in Nichtgebrauchsstellung der Vorrichtung;
- Figur 10: eine perspektivische Ansicht eines Einbaukörpers in der weiteren Ausführungsform, insbesondere der Rückenlehne, in Gebrauchsstellung der Vorrichtung und
- Figur 11: einen Schnitt durch ein Stützelement im Einbaukörper, insbesondere der Rückenlehne, in Gebrauchsstellung der Vorrichtung.

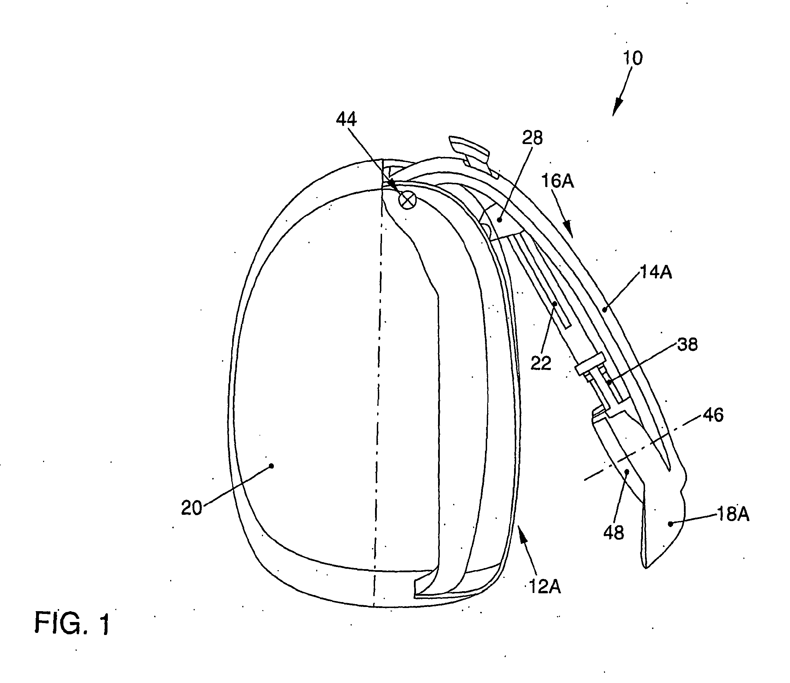

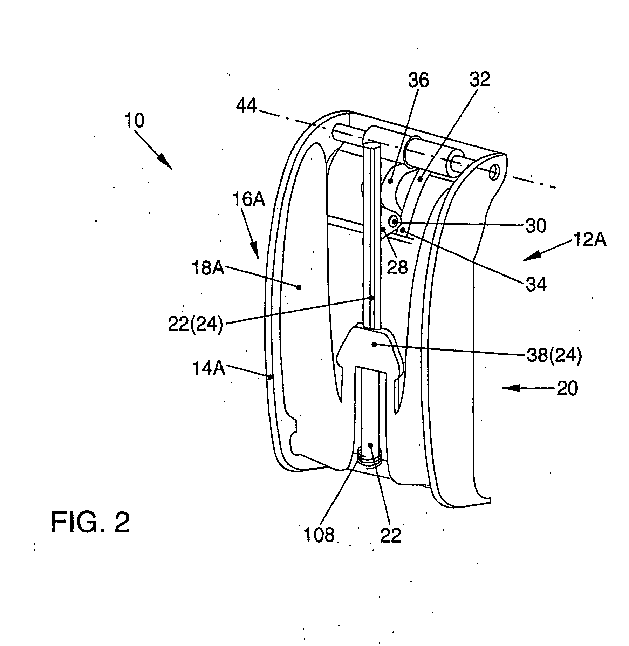

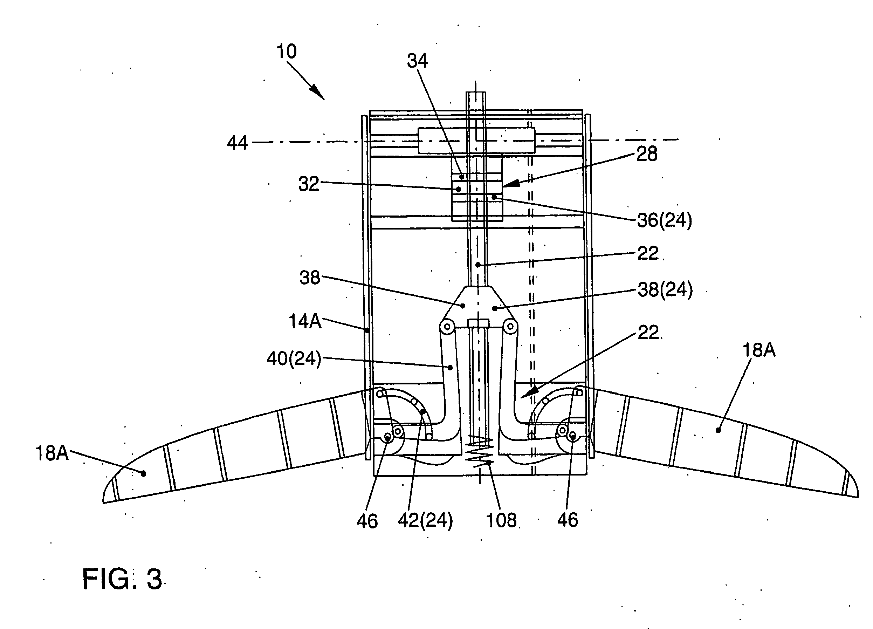

Figur 1 zeigt eine Seitenansicht eines Einbaukörpers, insbesondere eine Kopfstütze 20. Die Kopfstütze 20 weist ein erstes Abdeckelement 14A auf. Das erste Abdeckelement 14A ist auf einer ersten Schwenkachse 44 mit der Kopfstütze 20 verbunden. Das erste Abdeckelement 14A weist ferner ein Halteelement 48 auf. Das erste Abdeckelement 14A entspricht äußerlich einer ersten Kontur 16A, die der Form einer Kopfstütze in herkömmlicher Weise entspricht. In der Kopfstütze 20 ist ein erster Raum 12A vorgesehen, in dem die weiteren Bestandteile zu einer Vorrichtung 10 gehörend angeordnet sind. Die Vorrichtung 10 umfasst das erste Abdeckelement 14A, in dem im Wesentlichen ein stegartiges Element 28, eine Stange 22, Stangenglieder 38 und - in dieser Figur nicht sichtbar - Übertragungsbügel 40 sowie Verbindungsbügel 42 in Nichtgebrauchsstellung der Vorrichtung 10 so unterbringbar sind, dass sie von außen betrachtet nicht sichtbar sind. Auf die Übertragungselemente 24, die Stange 22, das Stangenglied 38, den Übertragungsbügel 40 sowie den Verbindungsbügel 42 wird näher in den folgenden Figuren 2 und 3 eingegangen.

Figur 2 zeigt eine perspektivische Innenansicht des Einbaukörpers in diesem Ausführungsbeispiel der Kopfstütze 20 in Nichtgebrauchsstellung der Vorrichtung 10. Zunächst zeigt Figur 2 wiederum die erste Schwenkachse 44, um die das erste Abdeckelement 14A schwenkbar gelagert ist. In der Kopfstütze 20, die im Bereich des Abdeckelementes 14A die Kontur 16A aufweist, ist ein Führungselement 32 angeordnet. Das Führungselement 32 liegt im Bereich des Einbaukörpers 20 in dem dafür vorgesehenen Raum 12A. Das Führungselement 32 weist eine erste Aussparung 34 und eine zweite Aussparung 36 auf. Die bügelförmigen Elemente 34 befinden sich noch in Nichtgebrauchsstellung im Wesentlichen vertikal und parallel zum Randbereich des Abdeckelementes 14A. Das stegartige Element 28 greift in Nichtgebrauchsstellung in die erste Aussparung 34 ein. Das stegartige Element 28 ist zudem fest mit der Stange 22 verbunden. Die Stange 22 endet im unteren Teil des ersten Abdeckelementes 14A im Halteelement 48 (in dieser Ansicht nicht sichtbar), wobei auf der Stange 22 ein Federelement 108 angeordnet ist. Das Federelement 108 stützt sich im Halteelement 48 ab und wirkt mit seiner Federkraft auf die Stange 22. Die Stange 22 bleibt jedoch so lange in Nichtgebrauchsstellung und ist in der ersten Aussparung 34 durch das stegartige Element 28 im Führungselement 32 fixiert, bis ein Fahrzeuginsasse, insbesondere ein auf einer Rücksitzbank sitzender Insasse, das erste Abdeckelement 14A bedient und das erste Abdeckelement 14A um die erste Schwenkachse 44 geschwenkt wird. Das stegartige Element 28 besitzt zur Unterstützung der Bewegung auf dem Führungselement 32 eine bewegliche Komponente 30, die sich nach Schwenken des ersten Abdeckelementes 14A auf dem Führungselement 32 aus der ersten Aussparung 34 in die zweite Aussparung 36 bewegt. Dadurch wird, durch das vorgespannte Federelement 108 hervorgerufen, eine Bewegung der Stange 22 vertikal nach oben gerichtet erreicht. Die Stange 22 ist durch die Übertragungselemente 24, in Figur 2 sichtbar, insbesondere über die Stangenglieder 38, mit den bügelförmigen Elementen 18A verbunden.

Figur 3 zeigt eine Innenansicht des Einbaukörpers, insbesondere der Kopfstütze 20, in Gebrauchsstellung der Vorrichtung 10. Diese Gebrauchsstellung wird erreicht, wie in Figur 2 beschrieben, indem das Abdeckelement 14A von der Kopfstütze 20 um die erste Schwenkachse 44 geklappt wird. Das stegartige Element 28 befindet sich nun - hervorgerufen durch das Federelement 108 - in der zweiten Aussparung 36 oberhalb der ersten Aussparung 34. Die bewegliche Komponente 30 gleitet bei dieser Bewegung am Führungselement 32 entlang. Die mit der Stange 22 fest verbundenen Stangenglieder 38 werden somit vertikal nach oben bewegt. Die Stangenglieder 38 sind mit den Übertragungsbügeln 40 verbunden, die ebenfalls vertikal nach oben mitbewegt werden. Dadurch, dass die Übertragungsbügel 40 auf einer Kreisbahn verlaufend auf dem drehbeweglich angeordneten, bügelförmigen Element 18A angeordnet sind, vollführen die bügelförmigen Elemente 18A eine rotorische Bewegung. Durch die Verbindungsbügel 42 zwischen dem ersten bügelförmigen Element 18A und dem Übertragungsbügel 40 wird die Rotationsbewegung der bügelförmigen Elemente 18A um eine Drehachse 46 ausgeführt.

In einer weiteren, jedoch nicht näher dargestellten Ausführungsform kann die Stange 22 auch als Zahnstange ausgeführt sein, wobei die Stangenglieder 38 dann entsprechend Zähne aufweisen, die in die Zähne der Zahnstange eingreifen, wodurch ebenfalls eine vertikale Bewegung der Stangenglieder 38 hervorrufbar ist.

In der Gebrauchsstellung weist die Vorrichtung 10 ein entspanntes Federelement 108 auf. Die Stange 22 durchbricht in Gebrauchsstellung das erste Abdeckelement 14A in einer dafür vorgesehenen Öffnung 26 im oberen Bereich des Abdeckelementes 14A.

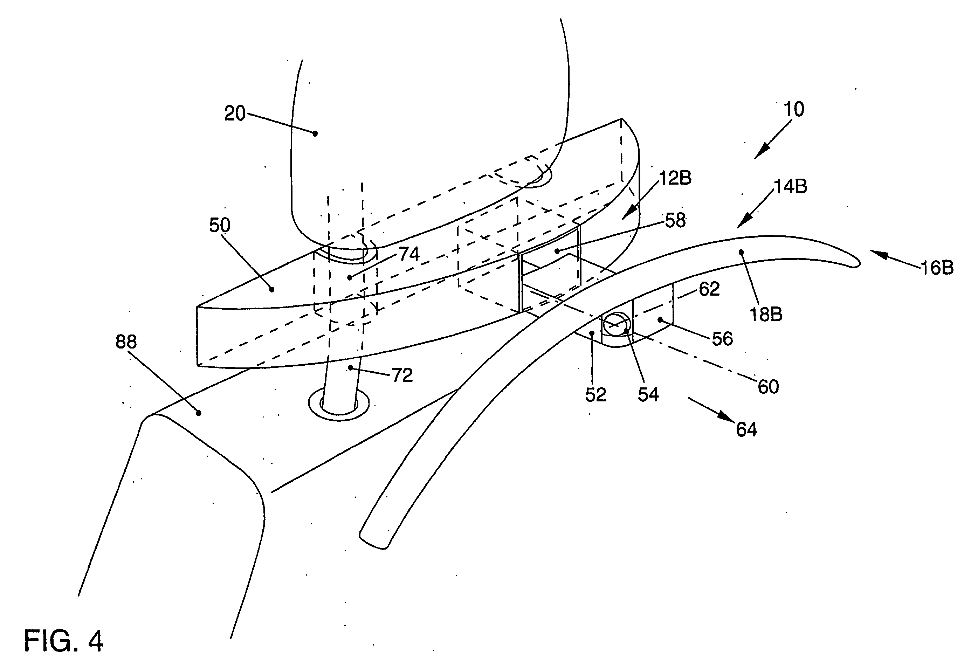

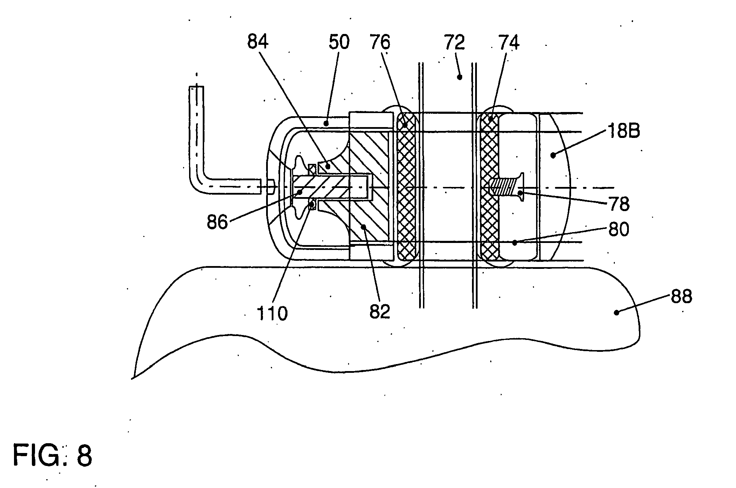

Figur 4 zeigt eine perspektivische Ansicht eines weiteren Einbaukörpers in einer weiteren Ausführungsform, insbesondere eine Konsole 50 in Gebrauchsstellung der Vorrichtung 10. Die Konsole 50 ist im Ausführungsbeispiel vorzugsweise zwischen der Kopfstütze 20 und einer Rückenlehne 88 angeordnet. Die Konsole 50 weist ein Schiebeelement 52 auf, welches auf einer Achse 60 in einer Verschieberichtung 64 verschiebbar angeordnet ist. Das Schiebeelement 52 weist ein erstes Gelenk 54 auf, welches vorzugsweise auf der Achse 60 angeordnet ist. In der in Figur 4 gezeigten Gebrauchsstellung ist das Gelenk 54 mit einem Verbindungselement 56 verbunden und auf einer zweiten Schwenkachse 62 um 90° geklappt. Das Verbindungselement 56 trägt mindestens ein zweites bügelförmiges Element 18B. Im Ausführungsbeispiel der Figur 4 ist das zweite bügelförmige Element 18B mittig auf dem Verbindungselement 56 angeordnet, so dass ein vollwertiger Kleiderbügel entsteht. Dieses zweite bügelförmige Element 18B weist eine zweite Kontur 14B auf und stellt gleichzeitig ein zweites Abdeckelement 14B in der Nichtgebrauchsstellung dar. Die Nichtgebrauchsstellung ist erreichbar, indem ausgehend von Figur 4 das Verbindungselement 56 auf der zweiten Schwenkachse 62 um 90° geklappt wird und somit auf der Achse 60 fluchtend angeordnet ist. Anschließend wird das Schiebeelement 52 in eine Aussparung 58 geschoben, wobei das Abdeckelement 14B die zweite Kontur 16B der Konsole 50 in einem zweiten - in der Konsole 50 - dafür vorgesehenen Raum 12B einnimmt. Die Konsole 50 ist an einer bekannten Kopfstützenhalterung 72 angeordnet. Erfindungsgemäß ist die Konsole 50 höhenverstellbar angeordnet. In Figur 4 wird bereits ein erstes Spannhüllelement 74 sichtbar. Auf die Höhenverstellbarkeit wird in Figur 8 noch näher eingegangen.

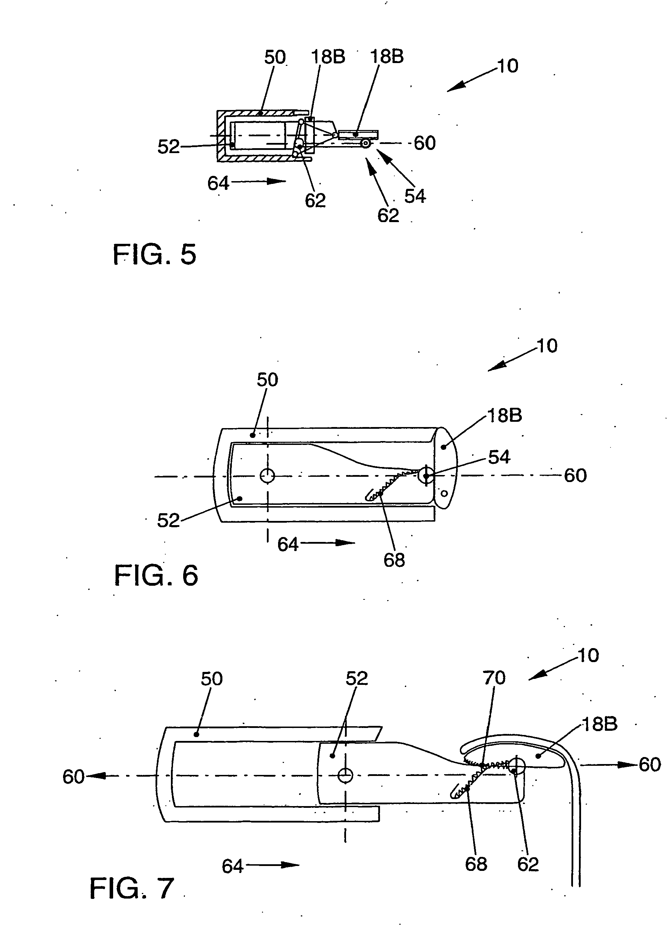

Die Figuren 5 bis 7 zeigen zunächst Detaillösungen der Führung und Befestigung des zweiten Äbdeckelementes 14B.

Figur 5 zeigt eine erste Lösung. In der Konsole 50 ist das Schiebeelement 52 in Gebrauchsstellung des bügelförmigen Elementes 18B dargestellt. Das Schiebeelement 52 ist in Schieberichtung 64 entlang der Achse 60 verschoben. Das erste Gelenk 54 ist ebenfalls in eine zweite Position überführt. Ein Verbindungselement 56 ist in dieser Figur 5 nicht vorhanden. Das zweite bügelförmige Halteelement 18B ist stirnseitig mit einer Gestängevorrichtung 66 verbunden. Die Gestängevorrichtung 66 ermöglicht, dass bei der Bewegung des zweiten bügelförmigen Halteelementes 18B in Gebrauchsstellung durch die Gestängevorrichtung 66 eine Art Begrenzung für das zweite bügelförmige Halteelement 18B ausgebildet ist. Die Gestängevorrichtung 66 ist an einem Punkt im Inneren der Konsole 50 mit der Konsole 50 verbunden und sichert beziehungsweise erzeugt ausreichend Stabilität des zweiten bügelförmigen Halteelementes 18B.

Figuren 6 und 7 zeigen eine andere Lösung. Das Schiebeelement 52 in der Konsole 50 besitzt eine Rastschiene 68. Figur 6 zeigt das zweite bügelförmige Halteelement 18B in der Nichtgebrauchsstellung. Die Vorrichtung 10 sitzt im Inneren der Konsole 50. Das erste Gelenk 54 ist auf der Achse 60 angeordnet. Wird das Schiebelement 52 in Schieberichtung 64 bewegt, nimmt das Schiebelement und die weiteren Elemente der Vorrichtung 10 die Gebrauchsstellung des zweiten bügelförmigen Halteelementes 18B ein. Figur 7 zeigt dabei die gleichen Teile mit gleichen Bezugszeichen, wobei das zweite bügelförmige Halteelemente 18B auf der der Rastschiene 68 zugewandten Seite Zähne 70 aufweist, die in die Rastschiene 68 eingreifen. Auf diese Weise findet ebenfalls eine Sicherung und gewünschte Justierung des zweiten bügelförmigen Halteelementes 18B statt.

Figur 8 zeigt einen Schnitt durch die Konsole 50 im Bereich der Kopfstützenhalterung 72 in Nichtgebrauchsstellung der Vorrichtung 10. Die Vorrichtung 10 ist hierbei oberhalb der Rückenlehne 88 angeordnet. Diese Höhenverstelleinrichtung an der Kopfstützentialterung , 72 ist für den Komfort des Nutzers als Einstellmöglichkeit wichtig, da in dieser Ausführungsform keine Höhenverstellung mit der Kopfstütze 20 realisiert werden kann. Das erste Spannhüllelement 74 - wie bereits in Figur 4 erwähnt - besitzt im Inneren der Konsole 50 ein Abdeckelement, so dass das erste Spannhüllelement 74 nicht sichtbar ist, wenn das zweite bügelförmige Halteelement 18B in Gebrauchsstellung ist. Dem ersten Spannhüllelement 74 liegt ein zweites Spannhüllelement 76 gegenüber. Auf dem zweiten Spannhüllelement 76 ist eine Druckplatte 82 innerhalb der Konsole 50 angeordnet. Die Höhenverstelleinrichtung umfasst weiterhin ein Konuselement 84, ein erstes Schraubelement 78 zur Befestigung des Abdeckelementes 80 und ein zweites Schraubelement 86 mit einem Anschlag 110 zur Befestigung des zweiten Spannhüllelementes 76 gegenüber dem ersten Spannhüllelement 74. Durch Drehen des zweiten Schraubelementes 86 wird über die Druckplatte 82 eine Kraft auf das zweite Spannhüllelement 76 übertragen, wodurch die Spannhüllelemente 74 und 76 reversibel an der Kopfstützenhalterung 72 verspannt werden. Das zweite Schraubelement 76 ist zum Zwecke der Bedienung in der Konsole 50 nach außen geführt.

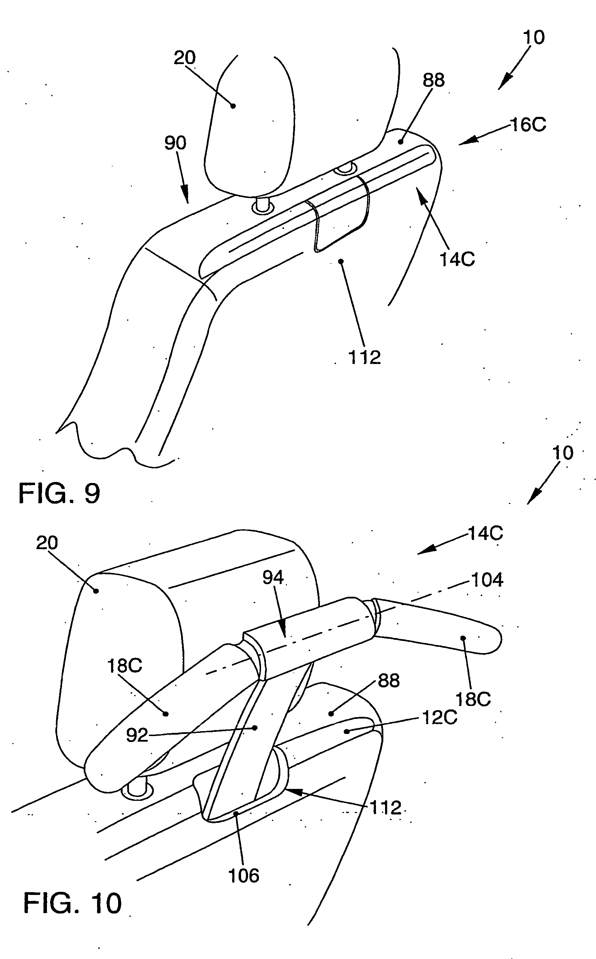

Figur 9 zeigt eine perspektivische Ansicht eines weiteren möglichen Einbaukörpers in einer weiteren Ausführungsform, insbesondere der Rückenlehne 88 in Nichtgebrauchsstellung der Vorrichtung 10. In die Rückenlehne 88 integriert ist die Kopfstütze 20 mit den zugehörigen Kopfstützenhalterungen 72 und ein Schacht 112, der im Inneren der Rückenlehne 88 angeordnet ist.

In der Rückenlehne 88, die auf einer Oberseite 90 der Rückenlehne 88 einen dritten vorgesehenen Raum 12C ausbildet, der erst in Figur 10 sichtbar wird, ist ein drittes Abdeckelement 14C angeordnet. Das dritte Abdeckelement 14C weist eine dritte Kontur 16C auf, die in dieser Ausführungsform in der Nichtgebrauchsstellung der Figur 9 nicht sichtbar ist. Das dritte Abdeckelement 14C ist, wie Figur 10 zeigt, aus der Nichtgebrauchsstellung in die Gebrauchsstellung durch Herausziehen in ein drittes bügelförmiges Element 18C . überführbar.

Der in Figur 10 sichtbare Schacht 112 wird in einer perspektivischen Ansicht des Einbaukörpers in der weiteren Ausführungsform, insbesondere der Rückenlehne 88, in Gebrauchsstellung der Vorrichtung 10 gezeigt. Vorzugsweise läuft der Schacht 112 unterhalb des vorgesehenen Raumes 12C für das dritte Abdeckelement 14C in einer Erweiterung einer Art Aussparung 106 aus. Durch die Aussparung 106 bildet sich in der Rückenlehne 88 eine Art Griff zur Bedienung des dritten bügelförmigen Halteelementes 18C. Im Schacht 112 ist ein Stützelement 92 angeordnet. Das Stützelement 92 trägt ein Verbindungsglied 94. Das Verbindungsglied 94 ist vorzugsweise derart ausgeführt, dass es mit der Aussparung 106 korrespondiert. An das Verbindungsglied 94 schließen sich die oder das dritte bügelartige(n) Element(e) 18C an, welche(s) in Gebrauchsstellung in etwa hinter der Kopfstütze 20 angeordnet ist/sind. Das dritte bügelartige Element 18C ist dabei gelenkig angeordnet, so dass die dritten bügelartigen Elemente 18C in Gebrauchsstellung nicht direkt auf einer ersten horizontalen Achse 104 angeordnet sind.

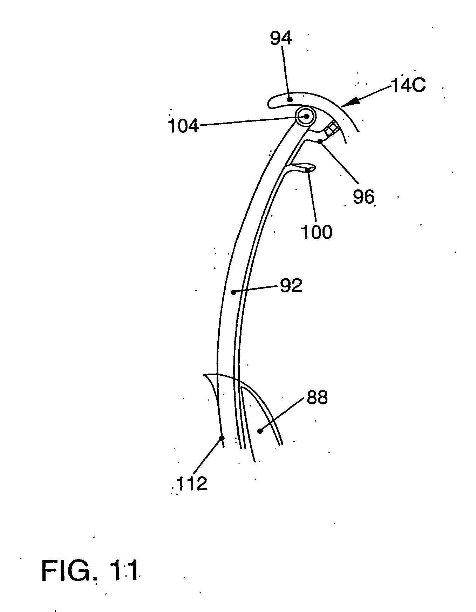

Figur 11 zeigt in einem Schnitt einige Details durch das Stützelement 92 in der Rückenlehne 88 in Gebrauchsstellung der Vorrichtung 10. Das-Stützelement 92 ist aus dem Schacht 112 herausgezogen dargestellt. Am Verbindungsglied 94 ist ein zweites Gelenk 102 sichtbar. Dieses zweite Gelenk 102 ermöglicht es, das Verbindungsglied 94 und damit das dritte bügelartige Element 18C zu kippen, bis es auf einem Justierelement 96 zur Anlage kommt. Ferner besitzt das Stützelement 92 einen Anschlag 100, der bei der Bewegung des Stützelementes 92 von der Gebrauchsstellung in die Nichtgebrauchsstellung für eine genaue Fixierung des Stützelementes 92 in die Rückenlehne 88 sorgt. Der Anschlag 100 korrespondiert mit einer nicht dargestellten Nut 98 am oberen Rand des Schachtes 112. Der Anschlag 100 greift in Nichtgebrauchsstellung in die Nut 98 ein.

### BEZUGSZEICHENLISTE

- 10: Vorrichtung
- 12: vorgesehener Raum
- 12A: erster vorgesehener Raum
- 12B: zweiter vorgesehener Raum
- 12C: dritter vorgesehener Raum
- 14: Abdeckelement
- 14A: erstes Abdeckelement
- 14B: zweites Abdeckelement
- 14C: drittes Abdeckelement
- 16: Kontur
- 16A: erste Kontur
- 16B: zweite Kontur
- 16C: dritte Kontur
- 18: bügelförmiges Element
- 18A: erstes bügelförmiges Element
- 18B: zweites bügelförmiges Element
- 18C: drittes bügelförmiges Element
- 20: Kopfstütze (Einbaukörper)
- 22: Stange
- 24: Übertragungselemente
- 26: Öffnung
- 28: stegartiges Element
- 30: bewegliche Komponente
- 32: Führungselement
- 34: erste Aussparung
- 36: zweite Aussparung
- 38: Stangenglied
- 40: Übertragungsbügel
- 42: Verbindungsbügel
- 44: erste Schwenkachse
- 46: Drehachse
- 48: Halteelement
- 50: Konsole (Einbaukörper)
- 52: Schiebeelement
- 54: erstes Gelenk
- 56: Verbindungselement
- 58: Aussparung
- 60: Achse
- 62: zweite Schwenkachse
- 64: Schieberichtung
- 66: Gestängevorrichtung
- 68: Rastschiene
- 70: Zähne
- 72: Kopfstützenhalterung
- 74: erstes Spannhüllelement
- 76: zweites Spannhüllelement
- 78: erstes Schraubelement
- 80: Abdeckelement
- 82: Druckplatte
- 84: Konuselement
- 86: zweites Schraubelement
- 88: Rückenlehne (Einbaukörper)
- 90: Oberseite (Rückenlehne)
- 92: Stützelement
- 94: Verbindungsglied
- 96: Justierelement
- 98: Nut
- 100: Anschlag
- 102: zweites Gelenk
- 104: erste horizontale Achse
- 106: Aussparung
- 108: Federelement
- 110: Scheibe

## Patentansprüche

1. Vorrichtung (10) zum Aufhängen von Gegenständen, insbesondere Kleiderstücken in einem Kraftfahrzeug, für den Einbau in einem Einbaukörper, insbesondere in eine Rückenlehne und/oder eine Kopfstütze (20) eines Kraftfahrzeugsitzes oder dergleichen, die aus einer Nichtgebrauchsstellung in eine Gebrauchsstellung verlagerbar ist, wobei die Vorrichtung (10)
• einerseits in der Nichtgebrauchsstellung mindestens ein, einen vorgesehenen Raum (12 / 12A, 12B, 12C) mindestens eines Einbaukörpers (20, 50, 88), abschließendes Abdeckelement (14 / 14A, 14B ,14C) aufweist, welches die Kontur (16 / 16A, 16B, 16C) des mindestens einen Einbaukörpers (20, 50, 88) nachbildet, und
• andererseits zur Erreichung der Gebrauchsstellung ein, bewegliche Elemente (22, 24, 26, 28, 30, 34, 36, 38, 40, 42 / 54, 56, 66, 68, 70 / 94, 102) aufweisendes, bügelförmiges Element (18 / 18A, 18B, 18C) umfasst, und
• das Abdeckelement (14 / 14A, 14B, 14C) und die zu dem Abdeckelement (14 /14A, 14B , 14C) gehörenden beweglichen Elemente (22, 24, 26, 28, 30, 34, 36, 38, 40, 42 / 54, 56, 66, 68, 70 / 94, 102) des bügelförmigen Elementes (18 /18A, 18B , 18C) in Gebrauchsstellung im Einbaukörper (20, 50, 88) nur noch an Elementen (32, 52, 92) im dafür vorgesehenen Raum (12 /12A, 12B, 12C) des Einbaukörpers (20, 50, 88) geführt sind, wobei
• das bügelförmige Element (18 / 18A, 18B, 18C) in Abhängigkeit einer Verlagerung des Abdeckelementes (14 / 14A, 14B, 14C), unter Aufhebung der Kontur (16 /16A, 16B, 16C) des Einbaukörpers (20, 50, 88) sowohl selbsttätig in die Gebrauchsstellung ausbildbar, als auch selbsttätig in die Nichtgebrauchsstellung unter Wiederherstellung der Kontur (16 / 16A, 16B, 16C) zurückbildbar ist,
**dadurch gekennzeichnet, dass**
die beweglichen Elemente (22, 24, 26, 28, 30, 34, 36, 38, 40, 42 / 54, 56, 66, 68, 70 /94, 102) gemeinsam mit dem ausgebildeten bügelförmigen Element (18 / 18A, 18B, 18C) in Gebrauchsstellung ausschliesslich ausserhalb des mindestens einen Einbaukörpers (20, 50, 88) am Abdeckelement (14 / 14A, 14B, 14C) ausgebildet sind.

2. Vorrichtung (10) nach Anspruch 1, **dadurch gekennzeichnet, dass** ein erstes Abdeckelement (14A) in einem ersten vorgesehenen Raum (12A) eine erste Kontur (16A) eines Teiles des Einbaukörpers, insbesondere einer Kopfstütze (20), ausbildet.

3. Vorrichtung (10) nach Anspruch 1 und 2, **dadurch gekennzeichnet, dass** das erste Abdeckelement (14A) an der Kopfstütze (20) drehbeweglich auf einer ersten Achse (44) öffenbar, schließbar und lagerbar ist.

4. Vorrichtung (10) nach Anspruch 1 bis 3, **dadurch gekennzeichnet, dass** das erste Abdeckelement (14A) auf der der Kopfstütze (20) zugewandten Seite mindestens eine Stange (22), Übertragungselemente (24), mindestens ein erstes Ver- und Entriegelungselement (26) sowie mindestens ein erstes bügelförmiges Element (18A) aufweist.

5. Vorrichtung (10) nach Anspruch 4, **dadurch gekennzeichnet, dass** das mindestens eine erste bügelförmige Element (18A) auf einer Drehachse (46) drehbeweglich in einem Halteelement (48) angeordnet ist, wobei das Halteelement (48) mit dem mindestens einen ersten Abdeckelement (14A) verbunden ist.

6. Vorrichtung (10) nach Anspruch 4, **dadurch gekennzeichnet, dass** das erste Ver- und Entriegelungselement (26) als ein zur Kopfstütze (20) gerichtetes, stegartiges Element (28) mit einer am Ende beweglichen Komponente (30) ausgebildet ist.

7. Vorrichtung (10) nach Anspruch 6, **dadurch gekennzeichnet, dass** das stegartige Element (28) mit der Stange (22) verbunden ist.

8. Vorrichtung (10) nach Anspruch 1, **dadurch gekennzeichnet, dass** die Kopfstütze (20) den Einbaukörper (20), ein Führungselement (32) mit mindestens einer ersten und einer zweiten Aussparung (34, 36) mit unterschiedlicher Tiefe aufweist.

9. Vorrichtung (10) nach Anspruch 4, **dadurch gekennzeichnet, dass** die Übertragungselemente (24) mindestens ein Stangenglied (38), mindestens einen beweglichen Übertragungsbügel (40), mindestens einen beweglichen Verbindungsbügel (42) und mindestens ein Federelement (108) umfassen.

10. Vorrichtung (10) nach Anspruch 9, **dadurch gekennzeichnet, dass** der mindestens eine bewegliche Übertragungsbügel (40) einerseits mit dem Stangenglied (38) und andererseits mit dem mindestens einen bügelförmigen Element (18A) in Verbindung steht.

11. Vorrichtung (10) nach Anspruch 9, **dadurch gekennzeichnet, dass** der mindestens eine bewegliche Verbindungsbügel (42) einerseits mit dem Übertragungsbügel (40) und andererseits mit dem mindestens einen bügelförmigen Element (18A) in Verbindung steht.

12. Vorrichtung (10) nach Anspruch 1, **dadurch gekennzeichnet, dass** ein zweites Abdeckelement (14B) in einem zweiten vorgesehenen Raum (12B) eine zweite Kontur (16B) eines Teiles des Einbaukörpers, insbesondere einer Konsole (50), die vorzugsweise zwischen der Kopfstütze (20) und einer Rückenlehne (88) angeordnet ist, einnimmt.

13. Vorrichtung (10) nach Anspruch 12, **dadurch gekennzeichnet, dass** das zweite Abdeckelement (14B) ein Schiebeelement (52) umfasst, welches entlang einer Achse (60) ein erstes Gelenk (54) aufweist und in Schieberichtung (64) reversibel verlagerbar ist.

14. Vorrichtung (10) nach Anspruch 13, **dadurch gekennzeichnet, dass** das erste Gelenk (54) ein Verbindungselement (56) aufweist.

15. Vorrichtung (10) nach Anspruch 14, **dadurch gekennzeichnet, dass** das Verbindungselement (56) ein zweites bügelförmiges Element (18B) aufweist.

16. Vorrichtung (10) nach Anspruch 13, **dadurch gekennzeichnet, dass** das zweite Schiebeelement (52) in einer Ausnehmung (58) des zweiten vorgesehenen Raumes (12B) der Konsole (50) reversibel verschiebbar angeordnet ist.

17. Vorrichtung (10) nach Anspruch 15 und 16, **dadurch gekennzeichnet, dass** das zweite bügelförmige Element (18B) nach Verschiebung in Schieberichtung (64) am ersten Gelenk (54) aus seiner Nichtgebrauchsstellung in seine Gebrauchsstellung, um vorzugsweise 90°, um eine zweite Schwenkachse (62) klappbar ist.

18. Vorrichtung (10) nach Anspruch 17, **dadurch gekennzeichnet, dass** die Klappbewegung des zweiten bügelförmigen Elementes (18B) nach der Klappung in seine Gebrauchsstellung durch eine Gestängevorrichtung (66) begrenzbar oder justierbar ist.

19. Vorrichtung (10) nach Anspruch 17, **dadurch gekennzeichnet, dass** die Klappbewegung des zweiten bügelförmigen Elementes (18B) nach der Klappung in seine Funktionsstellung in einer Rastschiene (68) mit in dem zweiten bügelförmigen Element (18B) angeordneten Zähnen (70) begrenzbar oder justierbar ist.

20. Vorrichtung (10) nach Anspruch 12, **dadurch gekennzeichnet, dass** die Konsole (50) mittels einer Arretierungsvorrichtung, die mindestens eine Druckplatte (82), ein Konuselement (84), mindestens ein zweites Schraubelement (86) und eine Scheibe (110) umfasst, an mindestens einer Kopfstützenhalterung (72) reversibel verschiebbar und arretierbar ist.

21. Vorrichtung (10) nach Anspruch 20, **dadurch gekennzeichnet, dass** die mindestens eine Kopfstützenhalterung (72) mindestens ein erstes und zweites Spannhüllelement (74, 76) umfasst.

22. Vorrichtung (10) nach Anspruch 21, **dadurch gekennzeichnet, dass** das mindestens eine erste Spannhüllelement (74) ein Abdeckelement (80) aufweist, welches vorzugsweise mittels eines ersten Schraubelementes (78) befestigbar ist.

23. Vorrichtung (10) nach Anspruch 20 und 21, **dadurch gekennzeichnet, dass** das mindestens eine zweite Spannhüllelement (76) eine Druckplatte (82) aufweist, über die das zweite Spannhüllelement (76) mittels der Arretierungsvorrichtung (82, 84, 86, 110) arretierbar ist.

24. Vorrichtung (10) nach Anspruch 1, **dadurch gekennzeichnet, dass** ein drittes Abdeckelement (14C) in einem dritten vorgesehenen Raum (12C) eine dritte Kontur (16C) eines Teils des Einbaukörpers, insbesondere der Rückenlehne (88), vorzugsweise einer Oberseite (90) der Rückenlehne (88) einnimmt.

25. Vorrichtung (10) nach Anspruch 24, **dadurch gekennzeichnet, dass** das dritte Abdeckelement (14C) ein Stützelement (92), mindestens ein Verbindungsglied (94) und mindestens ein drittes bügelförmiges Element (18C) aufweist.

26. Vorrichtung (10) nach Anspruch 25, **dadurch gekennzeichnet, dass** das Stützelement (92) in Nichtgebrauchsstellung in einem Schacht (112) in der Rückenlehne (88) angeordnet ist.

27. Vorrichtung (10) nach Anspruch 25 oder 26, **dadurch gekennzeichnet, dass** das Stützelement (92) mindestens einen Anschlag (100) ausbildet und vorzugsweise endseitig mindestens ein zweites Gelenk (102) angeordnet ist, welches mit dem mindestens einen Verbindungsglied (94) verbunden ist.

28. Vorrichtung (10) nach Anspruch 27, **dadurch gekennzeichnet, dass** das zweite Gelenk (102) auf einer im Wesentlichen horizontalen Achse (104) angeordnet ist.

29. Vorrichtung (10) nach Anspruch 25, **dadurch gekennzeichnet, dass** das Stützelement (92) von der Nichtgebrauchsstellung in die Gebrauchsstellung aus der Rückenlehne (88) reversibel herausbewegbar ist.

30. Vorrichtung (10) nach Anspruch 25, **dadurch gekennzeichnet, dass** das Verbindungsglied (94) in der Nichtfunktionsstellung in einer Aussparung (106) des dritten vorgesehenen Raumes (12C) anordbar ist und in der Funktionsstellung das mindestens eine dritte bügelförmige Element (18C) außerhalb der Aussparung (106) trägt.

31. Vorrichtung (10) nach Anspruch 30, **dadurch gekennzeichnet, dass** die angeordnete Aussparung (106) in der Rückenlehne (88) eine Art Griffmulde unterhalb des dritten Abdeckelementes (14C) ausbildet.

## Claims

1. Device (10) for hanging objects, in particular items of clothing, in a motor vehicle, for insertion into an insert body, in particular into a backrest and/or headrest (20) of a motor vehicle seat or the like, which device can be moved from a non-use position into a use position, wherein the device (10)
• firstly, in the non-use position, has at least one covering element (14/14A, 14B, 14C) which closes a designated space (12/12A, 12B, 12C) of at least one insert body (20, 50, 88) and replicates the contour (16/16A, 16B, 16C) of the at least one insert body (20, 50, 88), and
• secondly, in order to achieve the use position, comprises a hanger-shaped element (18/18A, 18B, 18C) which has movable elements (22, 24, 26, 28, 30, 34, 36, 38, 40, 42/54, 56, 66, 68, 70/94, 102), and
• in the use position, the covering element (14/14A, 14B, 14C) and the movable elements (22, 24, 26, 28, 30, 34, 36, 38, 40, 42/54, 56, 66, 68, 70/94, 102) of the hanger-shaped element (18/18A, 18B, 18C), which elements belong to the covering element (14/14A, 14B, 14C), are guided in the insert body (20, 50, 88) just on elements (32, 52, 92) in the designated space (12/12A, 12B, 12C) for this in the insert body (20, 50, 88), and wherein
• the hanger-shaped element (18/18A, 18B, 18C) can both be automatically formed into the use position as a function of a displacement of the covering element (14/14A, 14B, 14C), with the contour (16/16A, 16B, 16C) of the insert body (20, 50, 88) being neutralized, and can be automatically returned into the non-use position, with the contour (16/16A, 16B, 16C) being restored,
**characterized in that**,
in the use position, the movable elements (22, 24, 26, 28, 30, 34, 36, 38, 40, 42/54, 56, 66, 68, 70/94, 102) together with the hanger-shaped element (18/18A, 18B, 18C) are formed on the covering element (14/14A, 14B, 14C) exclusively outside the at least one insert body (20, 50, 88).

2. Device (10) according to Claim 1, **characterized in that** a first covering element (14A) forms a first contour (16A) of a part of the insert body, in particular of a headrest (20), in a first designated space (12A).

3. Device (10) according to Claims 1 and 2, **characterized in that** the first covering element (14A) can be opened, closed and mounted rotatably on a first spindle (44) on the headrest (20).

4. Device (10) according to Claims 1 to 3, **characterized in that** the first covering element (14A) has at least one rod (22), transmission elements (24), at least one first locking and unlocking element (26) and at least one first hanger-shaped element (18A) on the side facing the headrest (20).

5. Device (10) according to Claim 4, **characterized in that** the at least one first hanger-shaped element (18A) is arranged in a rotatable manner on a rotating spindle (46) in a holding element (48), the holding element (48) being connected to the at least one first covering element (14A).

6. Device (10) according to Claim 4, **characterized in that** the first locking and unlocking element (26) is designed as a web-like element (28) which is directed towards the headrest (20) and has a movable component (30) at the end.

7. Device (10) according to Claim 6, **characterized in that** the web-like element (28) is connected to the rod (22).

8. Device (10) according to Claim 1, **characterized in that** the headrest (20) has the insert body (20) and a guide element (32) with at least one first and one second cutout (34, 36) at differing depths.

9. Device (10) according to Claim 4, **characterized in that** the transmission elements (24) comprise at least one rod element (38), at least one movable transmission bow (40), at least one movable connecting bow (42) and at least one spring element (108).

10. Device (10) according to Claim 9, **characterized in that** the at least one movable transmission bow (40) is firstly connected to the rod element (38) and secondly to the at least one hanger-shaped element (18A).

11. Device (10) according to Claim 9, **characterized in that** the at least one movable connecting bow (42) is firstly connected to the transmission bow (40) and secondly to the at least one hanger-shaped element (18A).

12. Device (10) according to Claim 1, **characterized in that** a second covering element (14B) assumes a second contour (16B) of a part of the insert body, in particular of a console (50), which is preferably arranged between the headrest (20) and a backrest (88), in a second designated space (12B).

13. Device (10) according to Claim 12, **characterized in that** the second covering element (14B) comprises a sliding element (52) which has a first joint (54) along an axis (60) and can be displaced reversibly in the sliding direction (64).

14. Device (10) according to Claim 13, **characterized in that** the first joint (54) has a connecting element (56).

15. Device (10) according to Claim 14, **characterized in that** the connecting element (56) has a second hanger-shaped element (18B).

16. Device (10) according to Claim 13, **characterized in that** the second sliding element (52) is arranged in a reversibly displaceably manner in a recess (58) of the second designated space (12B) of the console (50).

17. Device (10) according to Claims 15 and 16, **characterized in that**, after displacement in the sliding direction (64), the second hanger-shaped element (18B) can be folded at the first joint (54) through preferably 90° about a second pivot axis (62) from its non-use position into its use position.

18. Device (10) according to Claim 17, **characterized in that**, after the second hanger-shaped element (18B) is folded into its use position, the folding movement thereof can be restricted or adjusted by means of a linkage device (66).

19. Device (10) according to Claim 17, **characterized in that**, after the second hanger-shaped element (18B) is folded into its functional position, the folding movement thereof can be restricted or can be adjusted in a latching rail (68) with teeth (70) arranged in the second hanger-shaped element (18B).

20. Device (10) according to Claim 12, **characterized in that** the console (50) can be displaced reversibly and can be retained on at least one headrest mount (72) by means of a retaining device which has at least one pressure plate (82), a conical element (84), at least one second screw element (86) and a disc (110).

21. Device (10) according to Claim 20, **characterized in that** the at least one headrest mount (72) comprises at least one first and second clamping casing element (74, 76).

22. Device (10) according to Claim 21, **characterized in that** the at least one first clamping casing element (74) has a covering element (80) which can preferably be fastened by means of a first screw element (78).

23. Device (10) according to Claims 20 and 21, **characterized in that** the at least one second clamping casing element (76) has a pressure plate (82) via which the second clamping casing element (76) can be retained by means of the retaining device (82, 84, 86, 110).

24. Device (10) according to Claim 1, **characterized in that** a third covering element (14C) assumes a third contour (16C) of a part of the insert body, in particular of the backrest (88), preferably of an upper side (90) of the backrest (88), in a third designated space (12C).

25. Device (10) according to Claim 24, **characterized in that** the third covering element (14C) has a supporting element (92), at least one connecting element (94) and at least one third hanger-shaped element (18C).

26. Device (10) according to Claim 25, **characterized in that**, in the non-use position, the supporting element (92) is arranged in a shaft (112) in the backrest (88).

27. Device (10) according to Claims 25 or 26, **characterized in that** the supporting element (92) forms at least one stop (100) and at least one second joint (102), which is connected to the at least one connecting element (94), is arranged preferably on the end side.

28. Device (10) according to Claim 27, **characterized in that** the second joint (102) is arranged on an essentially horizontal axis (104).

29. Device (10) according to Claim 25, **characterized in that** the supporting element (92) is movable reversibly out of the backrest (88) from the non-use position into the use position.

30. Device (10) according to Claim 25, **characterized in that**, in the non-functional position, the connecting element (94) can be arranged in a cutout (106) of the third designated space (12C) and, in the functional position, bears the at least one third hanger-shaped element (18C) outside the cutout (106).

31. Device (10) according to Claim 30, **characterized in that** the cutout (106) arranged in the backrest (88) forms a type of recessed grip below the third covering element (14C).

## Revendications

1. Dispositif (10) pour accrocher des objets, notamment des vêtements, dans un véhicule automobile, destiné à être incorporé dans un corps de montage, notamment dans un dossier et/ou un appui-tête (20) d'un siège de véhicule automobile ou similaire, qui peut être déplacé d'une position de non utilisation dans une position d'utilisation, le dispositif (10)
- présentant d'une part dans la position de non utilisation au moins un élément de recouvrement (14 / 14A, 14B, 14C) terminant un espace prévu (12 / 12A, 12B, 12C) d'au moins un corps de montage (20, 50, 88), qui reproduit le contour (16 / 16A, 16B, 16C) de l'au moins un corps de montage (20, 50, 88) et
- d'autre part comprenant, pour atteindre la position d'utilisation, un élément en forme de cintre (18 / 18A, 18B, 18C) présentant des éléments mobiles (22, 24, 26, 28, 30, 34, 36, 38, 40, 42 / 54, 56, 66, 68, 70 / 94, 102), et
- l'élément de recouvrement (14 / 14A, 14B, 14C) et les éléments mobiles (22, 24, 26, 28, 30, 34, 36, 38, 40, 42 / 54, 56, 66, 68, 70 / 94, 102) de l'élément en forme de cintre (18 / 18A, 18B, 18C) appartenant à l'élément de recouvrement (14 / 14A, 14B, 14C) étant seulement encore guidés sur des éléments (32, 52, 92) dans l'espace prévu pour cela (12 /12A, 12B, 12C) du corps de montage (20, 50, 88) dans la position d'utilisation dans le corps de montage (20, 50, 88),
- l'élément en forme de cintre (18 / 18A, 18B, 18C) pouvant être déployé automatiquement dans la position d'utilisation en fonction d'un décalage de l'élément de recouvrement (14 /14A, 14B, 14C) en enlevant le contour (16 /16A, 16B, 16C) du corps de montage (20, 50, 88) et pouvant aussi être résorbé automatiquement dans la position de non utilisation en rétablissant le contour (16 / 16A, 16B, 16C),
**caractérisé en ce que**
les éléments mobiles (22, 24, 26, 28, 30, 34, 36, 38, 40, 42 / 54, 56, 66, 68, 70 / 94, 102), conjointement avec l'élément en forme de cintre déployé (18 / 18A, 18B, 18C) étant déployés dans la position d'utilisation exclusivement en dehors de l'au moins un corps de montage (20, 50, 88) sur l'élément de recouvrement (14 / 14A, 14B, 14C).

2. Dispositif (10) selon la revendication 1, **caractérisé en ce qu'**un premier élément de recouvrement (14A) constitue, dans un premier espace prévu (12A), un premier contour (16A) d'une partie du corps de montage, notamment un appui-tête (20).

3. Dispositif (10) selon les revendications 1 et 2, **caractérisé en ce que** le premier élément de recouvrement (14A) peut être ouvert, fermé et supporté sur l'appui-tête (20) de manière mobile en rotation sur un premier axe (44).

4. Dispositif (10) selon l'une quelconque des revendications 1 à 3, **caractérisé en ce que** le premier élément de recouvrement (14A) présente, du côté tourné vers l'appui-tête (20), au moins une tige (22), des éléments de transfert (24), au moins un premier élément de verrouillage et de déverrouillage (26) ainsi qu'au moins un premier élément en forme de cintre (18A).

5. Dispositif (10) selon la revendication 4, **caractérisé en ce que** l'au moins un premier élément en forme de cintre (18A) est disposé sur un axe de rotation (46) de manière mobile en rotation dans un élément de retenue (48), l'élément de retenue (48) étant connecté à l'au moins un premier élément de recouvrement (14A).

6. Dispositif (10) selon la revendication 4, **caractérisé en ce que** le premier élément de verrouillage et de déverrouillage (26) est réalisé sous la forme d'un élément en forme de nervure (28) orienté vers l'appui-tête (20), avec un composant mobile (30) à l'extrémité.

7. Dispositif (10) selon la revendication 6, **caractérisé en ce que** l'élément en forme de nervure (28) est connecté à la tige (22).

8. Dispositif (10) selon la revendication 1, **caractérisé en ce que** l'appui-tête (20) présente le corps de montage (20), un élément de guidage (32) avec au moins un premier et un deuxième évidements (34, 36) de profondeurs différentes.

9. Dispositif (10) selon la revendication 4, **caractérisé en ce que** les éléments de transfert (24) comprennent au moins un organe de tige (38), au moins un arceau de transfert mobile (40), au moins un arceau de connexion mobile (42) et au moins un élément de ressort (108).

10. Dispositif (10) selon la revendication 9, **caractérisé en ce que** l'au moins un arceau de transfert mobile (40) est en liaison d'une part avec l'organe de tige (38) et d'autre part avec l'au moins un élément en forme de cintre (18A).

11. Dispositif (10) selon la revendication 9, **caractérisé en ce que** l'au moins un arceau de connexion mobile (42) est en liaison d'une part avec l'arceau de transfert (40) et d'autre part avec l'au moins un élément en forme de cintre (18A).

12. Dispositif (10) selon la revendication 1, **caractérisé en ce qu'**un deuxième élément de recouvrement (14B) adopte, dans un deuxième espace prévu (12B), un deuxième contour (16B) d'une partie du corps de montage, notamment une console (50) qui est disposée de préférence entre l'appui-tête (20) et un dossier (88).

13. Dispositif (10) selon la revendication 12, **caractérisé en ce que** le deuxième élément de recouvrement (14B) comprend un élément coulissant (52) qui présente, le long d'un axe (60), une première articulation (54) et qui peut être déplacé de manière réversible dans la direction de coulissement (64).

14. Dispositif (10) selon la revendication 13, **caractérisé en ce que** la première articulation (54) présente un élément de connexion (56).

15. Dispositif (10) selon la revendication 14, **caractérisé en ce que** l'élément de connexion (56) présente un deuxième élément en forme de cintre (18B).

16. Dispositif (10) selon la revendication 13, **caractérisé en ce que** le deuxième élément coulissant (52) est disposé de manière déplaçable et réversible dans un évidement (58) du deuxième espace prévu (12B) de la console (50).

17. Dispositif (10) selon les revendications 15 et 16, **caractérisé en ce que** le deuxième élément en forme de cintre (18B) peut être rabattu de 90° de préférence, autour d'un deuxième axe de pivotement (62), après le déplacement dans la direction de coulissement (64) sur la première articulation (54) de sa position de non utilisation dans sa position d'utilisation.

18. Dispositif (10) selon la revendication 17, **caractérisé en ce que** le mouvement de rabattement du deuxième élément en forme de cintre (18B) peut être limité ou ajusté après le rabattement dans sa position d'utilisation par un dispositif de tringlerie (66).

19. Dispositif (10) selon la revendication 17, **caractérisé en ce que** le mouvement de rabattement du deuxième élément en forme de cintre (18B) peut être limité ou ajusté après le rabattement dans sa position fonctionnelle dans un rail d'encliquetage (68) avec des dents (70) disposées dans le deuxième élément en forme de cintre (18B).

20. Dispositif (10) selon la revendication 12, **caractérisé en ce que** la console (50) peut être déplacée et bloquée de manière réversible sur au moins une fixation d'appui-tête (72) au moyen d'un dispositif de blocage, qui comprend au moins une plaque de pression (82), un élément de cône (84), au moins un deuxième élément fileté (86) et une rondelle (110).

21. Dispositif (10) selon la revendication 20, **caractérisé en ce que** l'au moins une fixation d'appui-tête (72) comprend au moins un premier et un deuxième élément d'enveloppe de serrage (74, 76).

22. Dispositif (10) selon la revendication 21, **caractérisé en ce que** l'au moins un premier élément d'enveloppe de serrage (74) présente un élément de recouvrement (80) qui peut être fixé de préférence au moyen d'un premier élément fileté (78).

23. Dispositif (10) selon les revendications 20 et 21, **caractérisé en ce que** l'au moins un deuxième élément d'enveloppe de serrage (76) présente une plaque de pression (82) qui permet de bloquer le deuxième élément d'enveloppe de serrage (76) au moyen du dispositif de blocage (82, 84, 86, 110).

24. Dispositif (10) selon la revendication 1, **caractérisé en ce qu'**un troisième élément de recouvrement (14C) adopte, dans un troisième espace prévu (12C), un troisième contour (16C) d'une partie du corps de montage, notamment du dossier (88), de préférence d'un côté supérieur (90) du dossier (88).

25. Dispositif (10) selon la revendication 24, **caractérisé en ce que** le troisième élément de recouvrement (14C) présente un élément de support (92), au moins un organe de connexion (94) et au moins un troisième élément en forme de cintre (18C).

26. Dispositif (10) selon les revendication 25, **caractérisé en ce que** l'élément de support (92) est disposé dans la position de non utilisation dans une gaine (112) dans le dossier (88).

27. Dispositif (10) selon l'une quelconque des revendications 25 ou 26, **caractérisé en ce que** l'élément de support (92) constitue au moins une butée (100) et de préférence au moins une deuxième articulation (102) est disposée du côté de l'extrémité et est connectée à l'au moins un organe de connexion (94).

28. Dispositif (10) selon la revendication 27, **caractérisé en ce que** la deuxième articulation (102) est disposée sur un axe (104) essentiellement horizontal.

29. Dispositif (10) selon la revendication 25, **caractérisé en ce que** l'élément de support (92) peut être ressorti de manière réversible hors du dossier (88) de la position de non utilisation dans la position d'utilisation.

30. Dispositif (10) selon la revendication 25, **caractérisé en ce que** l'organe de connexion (94) peut être disposé dans la position non fonctionnelle dans un évidement (106) du troisième espace prévu (12C) et porte dans la position fonctionnelle l'au moins un troisième élément en forme de cintre (18C) en dehors de l'évidement (106).

31. Dispositif (10) selon la revendication 30, **caractérisé en ce que** l'évidement disposé (106) dans le dossier (88) constitue une espèce de creux de préhension en dessous du troisième élément de recouvrement (14C).
